# EUROPEAN PATENT SPECIFICATION

(11) **EP 0 772 159 B1**
(45) Date of publication and mention of the grant of the patent: **21.01.2004**
(21) Application number: 96410113.3
(22) Date of filing: 30.10.1996
(51) Int. Cl.: G06T 9/00

(54) **Memory sharing in a MPEG decoder**
MPEG-Dekoder mit gemeinsamer Benutzung eines Speichers
Utilisation partagée de la mémoire dans un décodeur MPEG

(30) Priority: 30.10.1995 FR 9513044; 26.08.1996 US 702910
(43) Date of publication of application: 07.05.1997
(73) Proprietor: STMicroelectronics S.A., 92120 Montrouge (FR)
(72) Inventor: Colavin, Osvaldo, 38340, Voreppe (FR); Owen, Jefferson E., Fremont, California 94539 (US); Diaz, Raul Z., Palo Alto, California 94303 (US)
(74) Representative: de Beaumont, Michel

(56) References cited:
- EP-A- 0 673 171
- DIGITAL VIDEO COMPRESSION ON PERSONAL COMPUTERS: ALGORITHMS AND TECHNOLOGIES, SAN JOSE, CA, USA, 6-10 FEB. 1994, vol. 2187, ISSN 0277-786X, PROCEEDINGS OF THE SPIE - THE INTERNATIONAL SOCIETY FOR OPTICAL ENGINEERING, 1994, USA, pages 241-248, XP000564844 BHEDA H ET AL: "A high-performance cross-platform MPEG decoder"
- 1995 IEEE INTERNATIONAL SOLID-STATE CIRCUITS CONFERENCE. DIGEST OF TECHNICAL PAPERS. ISSCC (CAT. NO.95CH35753), PROCEEDINGS ISSCC '95 - INTERNATIONAL SOLID-STATE CIRCUITS CONFERENCE, SAN FRANCISCO, CA, USA, 15-17 FEB. 1995, ISBN 0-7803-2495-1, 1995, NEW YORK, NY, USA, IEEE, USA, pages 286-287, 381, XP000564842 GALBI D ET AL: "An MPEG-1 audio/video decoder with run-length compressed antialiased video overlays"
- ELECTRONIC DESIGN, 21 AUG. 1995, USA, vol. 43, no. 17, ISSN 0013-4872, pages 141-142, XP000531770 BURSKY D: "Highly integrated controller eases MPEG-1 adoption"
- 1992 IEEE INTERNATIONAL CONFERENCE ON CONSUMER ELECTRONICS (ICCE), ROSEMONT, IL, USA, 2-4 JUNE 1992, vol. 38, no. 3, ISSN 0098-3063, IEEE TRANSACTIONS ON CONSUMER ELECTRONICS, AUG. 1992, USA, pages 348-356, XP000311864 MATURI G: "Single chip MPEG audio decoder"

## Description

The present invention relates to the field of electronic systems having a video and/or audio decompression and/or compression device, and is more specifically directed to sharing a memory interface between a video and/or audio decompression and/or compression device and another device contained in the electronic system.

The size of a digital representation of uncompressed video images is dependent on the resolution, and color depth of the image. A movie composed of a sequence of such images, and the audio signals that go along with them, quickly becomes large enough so that, uncompressed, such a movie typically cannot fit entirely onto conventional recording medium, such as a CD. It is also typically now prohibitively expensive to transmit such a movie uncompressed.

It is therefore advantageous to compress video and audio sequences before they are transmitted or stored. A great deal of effort is being expended to develop systems to compress these sequences. There are several coding standards currently used that are based on the discrete cosine transform algorithm including MPEG-1, MPEG-2, H.261, and H.263. (MPEG stands for "Motion Picture Expert Group", a committee of the International Organization for Standardization, ISO.) The MPEG-1, MPEG-2, H.261, and H.263 standards are decompression protocols that describe how an encoded bitstream is to be decoded. The encoding can be done in any manner, as long as the resulting bitstream complies with the standard.

Video and/or audio compression devices (hereinafter encoders) are used to encode the video and/or audio sequence before it is transmitted or stored. The resulting bitstream is decoded by a video and/or audio decompression device (hereinafter decoder) before the video and/or audio sequence is played. However, a bitstream can only be decoded by a decoder if it complies to the standard used by the decoder. To be able to decode the bitstream on a large number of systems it is advantageous to encode the video and/or audio sequences to comply to a well accepted decompression standard. The MPEG standards are currently well accepted standards for one way communication. H.261, and H.263 are currently well accepted standards for video telephony.

Once decoded, the images can be displayed on an electronic system dedicated to playing video and audio, such as a television or a digital video disk (DVD) player, or on electronic systems where image display is just one feature of the system, such as a computer. A decoder needs to be added to these systems to allow them to play compressed sequences, such as received images and associated audio, or ones taken from a storage device. An encoder needs to be added to allow the system to compress video and/or audio sequences, to be transmitted or stored. Both need to be added for two way communication such as video telephony.

The European patent application EP-A-0 673 171 describes a digital signal decoder for decoding and decompressing compressed encoded video signals. The decoder is used in a personal computer environment.

The document DIGITAL VIDEO COMPRESSION ON PERSONAL COMPUTERS: ALGORITHMS AND TECHNOLOGIES, SAN JOSE, CA, USA, 6-10 Feb. 1994, vol. 2187, ISSN 0277-786X, PROCEEDINGS OF THE SPIE - THE INTERNATIONAL SOCIETY FOR OPTICAL ENGINEERING, 1994, USA, pages 241-248, XP000564844 BHEDA H ET AL: "A high-performance cross-platform MPEG decoder" describes a portable software MPEG decoder designed for PC platforms.

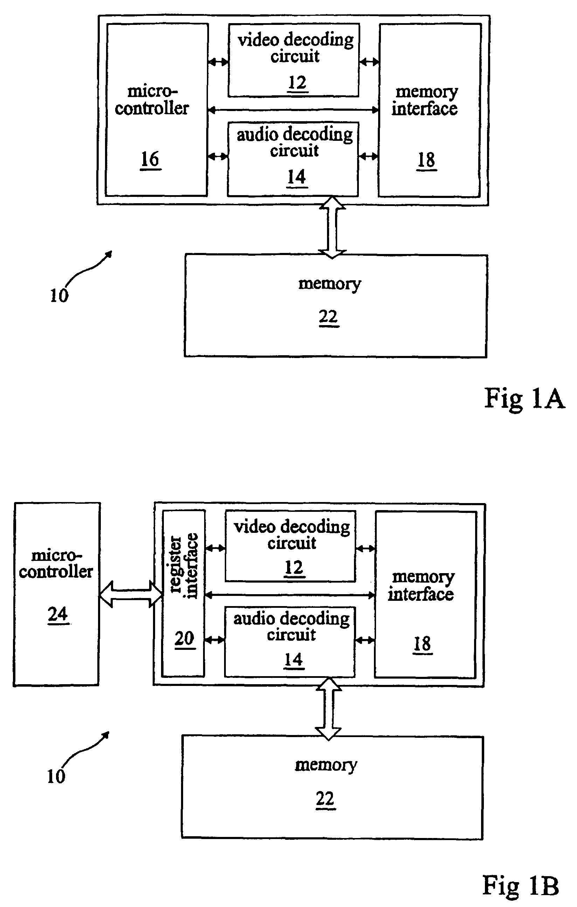

A typical decoder, such as an MPEG decoder 10 shown in Figure 1a, contains video decoding circuitry 12, audio decoding circuitry 14, a microcontroller 16, and a memory interface 18. The decoder can also contain other circuitry depending on the electronic system the decoder is designed to operate in. For example, when the decoder is designed to operate in a typical television the decoder will also contain an on screen display (OSD) circuit.

Figure 1b shows a better decoder architecture, used in the STi3520 and STi3520A MPEG Audio/MPEG-2 Video Integrated Decoder manufactured by SGS-THOMSON Microelectronics. The decoder has a register interface 20 instead of a microcontroller. The register interface 20 is coupled to an external microcontroller 24. The use of a register interface 20 makes it possible to tailor the decoder 10 to the specific hardware the decoder 10 interfaces with or change its operation without having to replace the decoder by just reprogramming the register interface. It also allows the user to replace the microcontroller 24, to upgrade or tailor the microcontroller 24 to a specific use, by just replacing the microcontroller and reprogramming the register interface 20, without having to replace the decoder 10.

The memory interface 18 is coupled to a memory 22. A typical MPEG decoder 10 requires 16 Mbits of memory to operate in the main profile at main level mode (MP at ML). This typically means that the decoder requires a 2Mbyte memory. Memory 22 is dedicated to the MPEG decoder 10 and increases the price of adding a decoder 10 to the electronic system. In current technology the cost of this additional dedicated memory 22 can be a significant percentage of the cost of the decoder.

An encoder also requires a memory interface 18 and dedicated memory. Adding the encoder to an electronic system again increases the price of the system by both the price of the encoder and its dedicated memory.

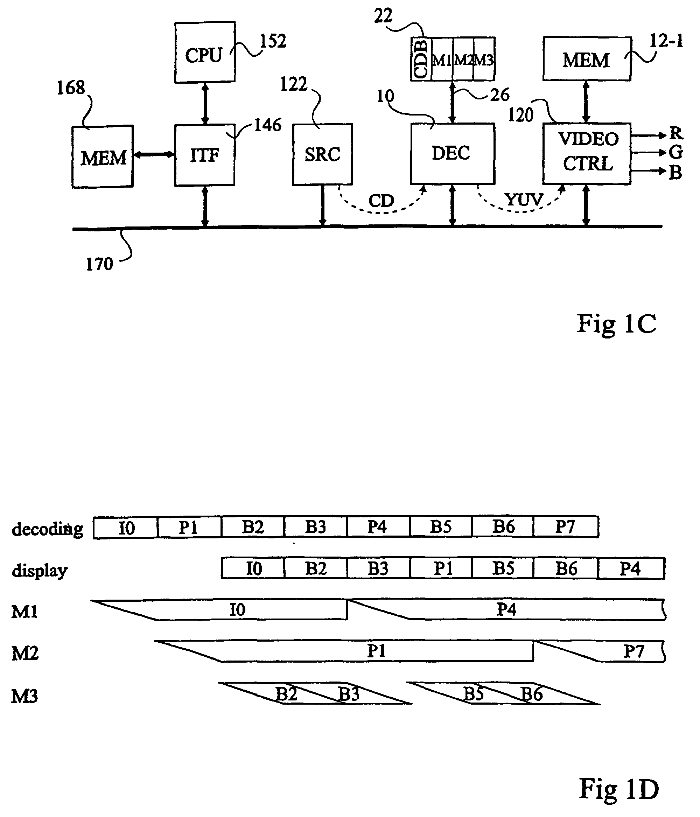

Figure 1c shows a conventional decoder inserted in a computer architecture. A conventional computer generally includes a peripheral bus 170, used to connect several necessary or optional components, such as a hard disk, a screen, etc. These peripherals are connected to bus 170 via interfaces (a display adapter 120 for the screen) which are provided directly on the computer's motherboard or on removable boards.

A central processing unit (CPU) 152 communicates with bus 170 through an interface circuit 146 which enables a main memory 168 of the computer to be shared between CPU 153 and peripherals of bus 170 which might require it.

The decoder 10 is connected as a master peripheral to bus 170, that is, it generates data transfers on this bus without involving CPU 152. The decoder receives coded data CD from a source peripheral 122, such as a hard disk or a CD-ROM, and supplies decoded images to display adapter 120. Recent display adapters enable to directly process the "YUV" (luminance and chrominance) image data normally supplied by a decoder, while a display adapter is normally designed to process "RGB" (red, green, blue) image information supplied by CPU 152.

Display adapter 120 has a memory 12-1 for storing the image under display, which comes from the CPU 152 or from the decoder 10. A conventional decoder 10 also has a dedicated memory 22. This memory is typically divided into three image areas or buffers M1 to M3 and a buffer CDB where the compressed data are stored before they are processed. The three image buffers respectively contain an image under decoding and two previously decoded images.

Figure 1d illustrates the use of buffers M1 to M3 in the decoding of a sequence of images I0, P1, B2, B3, P4, B5, B6, P7. I stands for a so-called "intra" image, whose compressed data directly corresponds to the image. P stands for a so-called "predicted" image, the reconstruction of which uses pixel blocks (or macroblocks) of a previously decoded image. Finally, B stands for a so-called "bidirectional" image, the reconstruction of which uses macroblocks of two previously decoded images. The intra and predicted images are likely to be used to reconstruct subsequent predicted and bidirectional images, while the bidirectional images are not used again.

Images 10 and P1 are respectively stored in buffers M1 and M2 during their decoding. The filling and the emptying of a buffer are illustrated by oblique lines. The decoding of image P1 uses macroblocks of image I0. Image I0, stored in buffer M1, is displayed during the decoding of image B2, this image B2 being stored in buffer M3. The decoding of image B2 uses macroblocks of images 10 and P1. Image B2 is displayed immediately after image 10. As the locations of buffer M3 become empty, they are filled by decoded information of image B3. The decoding of image B3 also uses macroblocks of images I1 and P1. Once image B3 is decoded, it is displayed immediately, while image P4 is decoded by using macroblocks of image P1. Image P4 is written over image 10 in buffer M1 since image 10 will no longer be used to decode subsequent images. After image B3, image P1 is displayed while buffer M3 receives image B5 under decoding. The decoding of image B5 uses macroblocks of images P1 and P4. Image P1 is kept in buffer M2 until the decoding of image B6, which also uses macroblocks of images P1 and P4, and so on.

Referring again to Figure 1c, when any component needs access to the main memory 168 either to read from or write to the main memory 168, it generates a request which is placed on the bus 170. When the request is a write, the data to be written is also placed on the bus 170. The request is processed and the data is then either written to or read from the main memory 168. When data is read from the main memory 168 the data is now placed on the bus and goes to the component that requested the read.

There are typically many components in the computer systems that may require access to the main memory 168, and they are typically all coupled to the same bus 170, or possibly to several buses if there are not enough connectors on one bus to accommodate all of the peripherals. However, the addition of each bus is very expensive. Each request is typically processed according to a priority system. The priority system is typically based on the priority given to the device and the order in which the requests are received. Typically, the priority system is set up so no device monopolizes the bus, starving all of the other devices. Good practice suggests that no device on the bus requires more than approximately 50% of the bus's bandwidth.

The minimum bandwidth required for the decoder 10 can be calculated based on the characteristics and desired operation of the decoder. These characteristics include the standard to which the bitstream is encoded to comply with, whether the decoder is to operate in real time, to what extent frames are dropped, and how the images are stored. Additionally, the latency of the bus that couples the decoder to the memory should be considered.

If the decoder does not operate in real time, the decoded movie would stop periodically between images until the decoder can get access to the memory to process the next image. The movie may stop quite often between images and wait.

To reduce the minimum required bandwidth and still operate in real time, the decoder 10 may need to drop frames. If the decoder 10 regularly does not decode every frame, then it may not need to stop between images. However, this produces very poor continuity in the images. This is problematic with an image encoded to the MPEG-1 or MPEG-2 standards, or any standard that uses temporal compression. In temporal (interpicture) compression some of the images are decoded based on previous images and some based on previous and future images. Dropping an image on which the decoding of other images is based is unacceptable, and will result in many poor or even completely unrecognizable images.

The computer can also contain both a decoder and encoder to allow for video telephony, as described above. In this case not operating in real time would mean that the length of time between the occurrence of an event, such as speaking, at one end of the conversation until the event occurs at the other end of the conversation, is increased by the time both the encoder and then the decoder must wait to get access to the bus and the main memory. Not being able to operate in real time means that there would be gaps in the conversation until the equipment can catch up. This increases the time needed to have a video conference, and makes the conference uncomfortable for the participants.

One widely used solution to allow a component in a computer system to operate in real time is to give the component its own dedicated memory. Thus, as shown in Figure 1c, the decoder 10 can be given its own dedicated memory 22, with a dedicated bus 26 to connect the decoder 10 to its memory 22. The dedicated memory 22 significantly increases the cost of adding a decoder 10 to the computer.A disadvantage of a computer equipped with a conventional decoder is that it has a non-negligible amount of memory which is unused most of the time.

Indeed, memory 22 of the decoder is only used when decoded images are being viewed on the computer screen or need to be encoded, which only amounts to a fraction of the time spent on a computer. This memory, inaccessible to the other peripherals or to the CPU, has a size of 512 Kbytes in an MPEG-1 decoder, and a size of 2 Mbytes in an MPEG-2 decoder. Further, this memory is oversized, since it is obtained by using currently available memory components.

The present application discloses an electronic system that contains a first device and video and/or audio decompression and/or compression device capable of operating in real time. Both the first device and the video and/or audio decompression and/or compression device require access to a memory. The video and/or audio decompression and/or compression device shares the memory with the first device. The two devices are coupled to the memory through a fast bus having a bandwidth of at least the minimum bandwidth needed for the video and/or audio decompression and/or compression device to operate in real time.

In one embodiment of the invention the two devices share an arbiter. The arbiter and DMA engines of the video and/or audio decompression and/or compression device and of the first device are configured to arbitrate between the two devices when one of them is requesting access to the memory. This allows both the video and/or audio decompression and/or compression device and the first device to share the memory.

When the video and/or audio decompression and/or compression device used in an electronic system, such as a computer, already containing a device that has a memory, the video and/or audio decompression and/or compression device can share that memory, and the memory of the video and/or audio decompression and/or compression device can be eliminated. Eliminating the memory greatly reduces the cost of adding the video and/or audio decompression and/or compression device to the electronic system.

The decoder memory is part of the main memory of the computer. The computer should have a fast bus (such as a memory bus, a PCI -"Peripheral Component Interconnect" - bus, a VLB - "VESA Local Bus", or an AGP - "Advanced Graphics Port" - bus, or any bus having a bandwidth sufficient to allow the system to operate in real time) which will accept high image rates between the decoder, the main memory and the display adapter.

According to an embodiment of the present invention, the decoder directly supplies a display adapter of the screen with an image under decoding which is not used to decode a subsequent image.

According to an embodiment of the present invention, the main memory stores intra images which are not obtained from a preceding image and predicted images which are obtained from a single preceding image, the images directly supplied to the display adapter being bidirectional images obtained from two preceding intra or predicted images.

According to an embodiment of the present invention, the decoder is disposed on the computer's motherboard.

An advantage of the present invention is the significant cost reduction due to the fact that the video and/or audio decompression and/or compression device does not need its own dedicated memory but can share a memory with another device and still operate in real time.

A further advantage of the present invention is that the video and/or audio decompression and/or compression device can share the memory of a first device without being integrated into this device, allowing the first device to be a standard device with some adjustments made to its memory interface.

Other advantages and objects of the invention will be apparent to those of ordinary skill in the art having reference to the following specification together with the drawings.

Figure 1a and 1b are electrical diagrams, in block form, of prior art decoders.

Figure 1c is an electrical diagram, in block form, of a computer architecture including a conventional decoder.

Figure 1d, illustrates the use of image buffers in the processing of an image sequence by a conventional MPEG decoder.

Figure 2 is an electrical diagram, in block form, of an electronic system containing a device having a memory interface and an encoder and decoder.

Figure 3 is an electrical diagram, in block form, of a computer system containing a core logic chipset designed for the CPU to share a memory interface with an encoder and/or decoder according to one embodiment of the present invention.

Figure 4 is an electrical diagram, in block form, of a computer architecture including an encoder and/or decoder according to another embodiment of the present invention.

Figure 5 illustrates the use of image buffers in the processing of an image sequence by an MPEG decoder according to the present invention.

Figure 6 is an electrical diagram, in block form, of an embodiment of an MPEG decoder architecture according to the present invention.

Figure 7 is an electrical diagram, in block form, of a computer system containing a graphics accelerator designed to share a memory interface with an encoder and/or decoder.

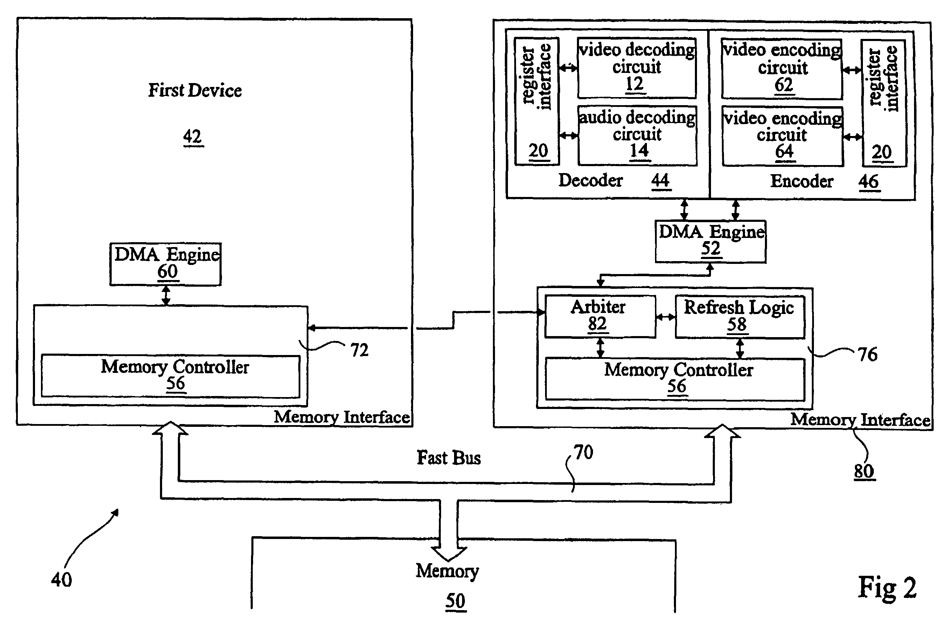

Figure 2 shows an electronic system 40 containing a first device 42 having access to a memory 50, and a decoder 44 and encoder 46, having access to the same memory 50. First device 42 can be a processor, a core logic chipset, a graphics accelerator, or any other device that requires access to the memory 50, and either contains or is coupled to a memory interface. In an embodiment of the invention, electronic system 40 contains a first device 42, a decoder 44, an encoder 46, and a memory 50. Although, either the decoder 44 or encoder 46 can be used in the decoder/encoder 80 without the other, for ease of reference, a video and/or audio decompression and/or compression device 80 will hereinafter be referred to as decoder/encoder 80. The decoder/encoder 80 may be a single device, or cell on an integrated circuit, or may be two separate devices, or cells in an integrated circuit. In this embodiment of the invention, the first device 42 and the decoder/encoder 80 are on one integrated circuit, however, they can be on separate integrated circuits in any combination.

The decoder 44 includes a video decoding circuit 12 and an audio decoding circuit 14, both coupled to a register interface 20. The decoder 44 can be either a video and audio decoder, just a video, or just an audio decoder. If the decoder 44 is just a video decoder it does not contain the audio decoding circuitry 14. The audio decoding can be performed by a separate audio codec coupled to the first device 42, or through software. In an embodiment of the invention, when the decoder/encoder 80 is in a system containing a processor and is coupled to the processor, the audio decoding is performed in software. This frees up space on the die without causing significant delay in the decoding. If the audio decoding is performed in software, the processor should preferably operate at a speed to allow the audio decoding to be performed in real time without starving other components of the system that may need to utilize the processor. For example, current software to perform AC-3 audio decoding takes up approximately 40% of the bandwidth of a 133 MHz Pentium. The encoder 46 includes a video encoding circuit 62 and an audio encoding circuit 64, both coupled to a register interface 20. The encoder 46 can be either a video and audio encoder, just a video, or just an audio encoder. If the encoder 46 is just a video encoder, it does not contain the audio encoding circuitry 64. The audio encoding can be performed by a separate audio codec coupled to the first device 42, or through software. In an embodiment of the invention, when the decoder/encoder 80 is in a system containing a processor and is coupled to the processor, the audio encoding is performed in software, presenting the same advantages of freeing up space on the die without causing significant delay in the encoding. The register interfaces 20 of the decoder 44 and encoder 46 are coupled to a processor.

The decoder 44 and encoder 46 are coupled to the direct memory access (DMA) engine 52. The decoder and encoder can be coupled to the same DMA engine as shown in Figure 2, or each can have its own DMA engine, or share a DMA engine with another device. When the decoder/encoder 80 are two separate devices or cells, decoder 44 and encoder 46 can still be coupled to one DMA engine 52. When the decoder/encoder is one device or is one cell on an integrated circuit, the DMA engine 52 can be part of the decoder/encoder 80, as shown in Figure 2. The DMA engine 52 is coupled to the arbiter 82 of the memory interface 76. The arbiter 82 is preferably monolithically integrated into the memory interface 76 of the decoder or into the memory interface 72 of the first device. However, the arbiter 82 can be a separate cell or device coupled to the memory interfaces 76, 72 of the decoder/encoder 80 and the first device 42. The arbiter 82 is also coupled to the refresh logic 58 and the memory controller 56 of the device into which it is monolithically integrated. The refresh logic 58, like the arbiter 82 can be monolithically integrated into the memory interface 76 of the decoder, into the memory interface 72 of the first device, or be a separate cell or device coupled to the arbiter 82.

The first device 42 also contains a memory interface 72 and DMA engine 60. The DMA engine 60 of the first device 42 is coupled to the memory interface 72 of the first device 72.

Both memory interfaces 72, 76 are coupled to a memory 50. The memory controllers 56 are the control logic that generates the address the memory interfaces 72, 76 access in the memory 50 and the timing of the burst cycles.

In current technology, memory 50 is typically a DRAM. However, other types of memory can be used. The refresh logic 58 is needed to refresh the DRAM. However, as is known in the art, if a different memory is used, the refresh logic 58 may not be needed and can be eliminated.

The decoder/encoder 80 is coupled to the memory 50 through devices, typically a bus 70, that have a bandwidth greater than the bandwidth required for the decoder/encoder 80 to operate in real time. The minimum bandwidth required for the decoder/encoder 80 can be calculated based on the characteristics and desired operation of the decoder, including the standard to which the bitstream is encoded to comply with, whether the decoder/encoder 80 is to operate in real time, to what extent frames are dropped, and which images are stored. Additionally, the latency of the bus 70 that couples the decoder/encoder 80 to the memory 50 should be considered.

A goal is to have the decoder/encoder 80 operate in real time without dropping so many frames that it becomes noticeable to the human viewer of the movie. To operate in real time the decoder/encoder 80 should decode and/or encode images fast enough so that any delay in decoding and/or encoding cannot be detected by a human viewer. This means that the decoder/encoder 80 has a required bandwidth that allows the decoder/encoder 80 to operate fast enough to decode the entire image in the time between screen refreshes, which is typically 1/30 of a second, with the human viewer not being able to detect any delay in the decoding and/ or encoding. To operate in real time the required bandwidth should be lower than the bandwidth of the bus. In order not to starve the other components on the bus, i.e. deny these components access to the memory for an amount of time that would interfere with their operation, this required bandwidth should preferably be substantially less than the entire bandwidth of the bus. Therefore a fast bus 70 should be used. A fast bus 70 is any bus whose bandwidth is greater than the required bandwidth. There are busses, in current technology, including the ISA bus, whose bandwidth is significantly below the bandwidth required for this.

Thus, the decoder/encoder 80 according to the invention is coupled to the memory 50 through a fast bus 70 that has a bandwidth of at least the bandwidth required for the decoder/encoder 80 to operate in real time, a threshold bandwidth. Preferably the fast bus 70 has a bandwidth of at least approximately twice the bandwidth required for the decoder/encoder 80 to operate in real time. In an embodiment, the fast bus 70 is a memory bus, however any bus having the required bandwidth can be used.

The decoder/encoder 80 only requires access to the memory during operation. Therefore, when there is no need to decode or encode, the first device 42, and any other devices sharing the memory 50 have exclusive access to the memory, and can use the entire bandwidth of the fast bus 70.

In an embodiment, even during decoding and encoding, the decoder/encoder 80 does not always use the entire required bandwidth. Since the fast bus 70 may have a bandwidth a little less than twice the required bandwidth the decoder/encoder 80 uses at most 60% of the bandwidth of the fast bus 70.

The required bandwidth is determined based on the size and resolution of the image, and the type of frame (I, P, or B). In one embodiment, the decoder/encoder typically will be using less than 40% of the bandwidth of the fast bus 70. This frees up the remaining bandwidth to be used by the other devices the decoder/encoder 80 is sharing the memory 50 with.

The decoder/encoder 80 can decode a bitstream formatted according to any one or a combination of standards. In one embodiment of the invention, the decoder/encoder 80 is a multi-standard decoder/encoder capable of decoding and encoding sequences formatted to comply to several well accepted standards. This allows the decoder/encoder 80 to be able to decode a large number of video and/or audio sequences. The choice of which standards the decoder/encoder 80 is to comply with is based on the desired cost, efficiency, and application of the decoder/encoder 80.

In one embodiment, these standards require both intrapicture compression and interpicture compression. In intrapicture compression the redundancy within the image is eliminated. In interpicture compression the redundancy between two images is eliminated and only the difference information is transferred. This requires the decoder/encoder 80 to have access to the previous or future image that contains information needed to decode or encode the current image. These previous and/or future images need to be stored and then used to decode the current image. This is one of the reasons the decoder/encoder 80 requires access to the memory, and requires a large bandwidth. The MPEG-1 and MPEG-2 standards require decoding based on both previous images and/or future images. Therefore for a decoder/encoder 80 capable of operating in real time to be able to comply with the MPEG-1 and MPEG-2 standards, it should be able to access two images, a previous and a future image, fast enough to decode the current image in the 1/30 of a second between screen refreshes.

An MPEG environment is asymmetrical; there are much fewer encoders than decoders. The encoders are very difficult and expensive to manufacture and the decoders are comparatively easy and cheap. This encourages many more decoders than encoders, with the encoders in centralized locations, and decoders available such that every end user can have a decoder. Therefore, there are many receivers but few transmitters.

For video telephony and teleconferencing each end user has to be able to both receive and transmit. H.261 and H.263 are currently well accepted standards for video telephony. An encoder that can encode sequences complying with the H.261 and H.263 standards is less complicated, having a lower resolution and lower frame rate than an encoder that complies with the MPEG-1 or MPEG-2 standards, possibly making the quality of the decoded images somewhat lower than those from an encoder that complies with the MPEG-1 or MPEG-2 standards. Such an encoder, since it should be inexpensive and operate in real time, is also less efficient than an encoder complying with the MPEG-1 or MPEG-2 standards, meaning that the compression factor, which is the ratio between the source data rate and the encoded bitstream data rate, of such an encoder is lower, for a given image quality, than the compression factor of an MPEG encoder. However, because such an encoder is less complicated it is much cheaper and faster than an encoder capable of complying with the MPEG-1 and/or MPEG-2 standards. This makes video telephony possible, since both a long delay in encoding the signal and a cost that is prohibitively expensive are avoided.

In one embodiment, the decoder/encoder 80 is capable of decoding a bitstream formatted to comply with the MPEG-1, MPEG-2, H.261, and H.263 standards, and encoding a sequence to produce a bitstream to comply with the H.261, and H.263 standards. This allows the decoder/encoder 80 to be used for video telephony. The encoding to comply with the H.261 and H.263 standards but not the MPEG-1 and MPEG-2 balances the desire to reduce the cost of transmission and storage by encoding to produce the highest compression factor and the desire to keep cost low enough to be able to mass market the device.

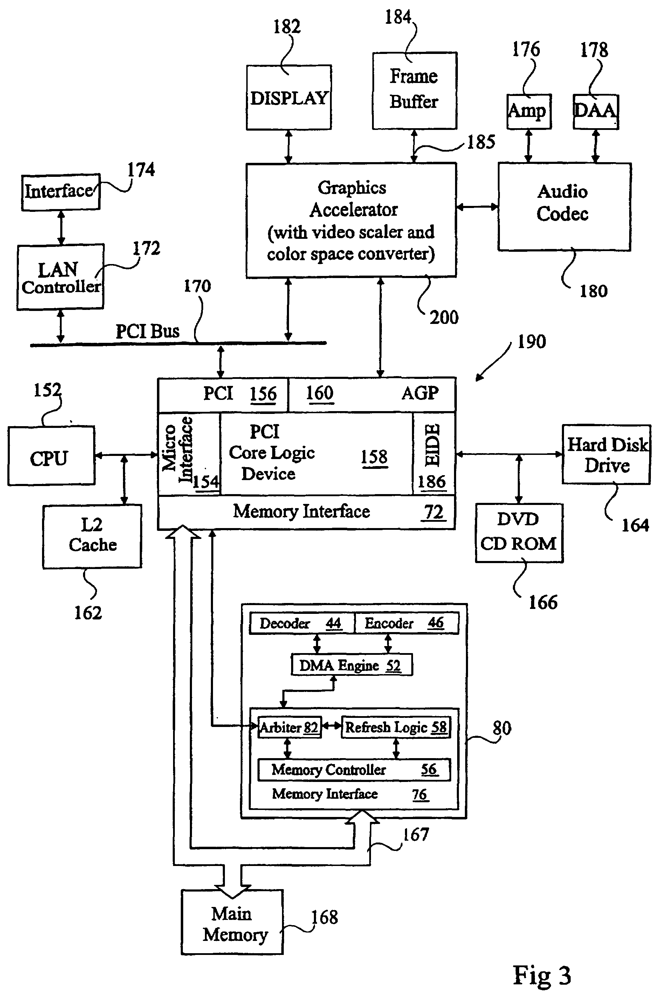

Figure 3 shows one embodiment of a computer where the decoder/encoder 80 is sharing a main memory 168 with a core logic chipset 190. The core logic chipset 190 can be any core logic chipset known in the art. In the embodiment shown in Figure 3 the core logic chipset 190 is a PCI core logic chipset 190, which contains a PCI core logic device 158, the processor interface 154, a memory interface 72, and bus interfaces 156 for any system busses 170 to which it is coupled. The core logic chipset 190 can also contain an accelerated graphics port (AGP) 160 if a graphics accelerator 200 is present in the computer, and an enhanced integrated device electronics (EIDE) interface 186. The core logic chipset 190 is coupled to a processor 152, peripherals, such as a hard disk drive 164 and a DVD or CD-ROM 166, a bus, such as a PCI bus 170, the arbiter 82, and the main memory 168.

In this embodiment, the main memory 168 is the memory 50 to which the memory interfaces 72 and 76 are coupled. The main memory 168 is coupled to the memory interfaces 72 and 76 through a memory bus 167. In current technology the memory bus 167, which corresponds to the fast bus 70, for coupling a core logic chipset to a memory, may have a bandwidth of approximately 400 Mbytes/s. This bandwidth is at least twice the bandwidth required for an optimized decoder/encoder 80, allowing the decoder/encoder 80 to operate in real time.

The core logic chipset 190 can also be coupled to cache memory 162 and a graphics accelerator 200 if one is present in the computer. The PCI bus 170 is also coupled to the graphics accelerator 200 and to other components, such as a local-area network (LAN) controller 172. The graphics accelerator 200 is coupled to a display 182, and a frame buffer 184. The graphics accelerator can also be coupled to an audio codec 180 for decoding and/or encoding audio signals.

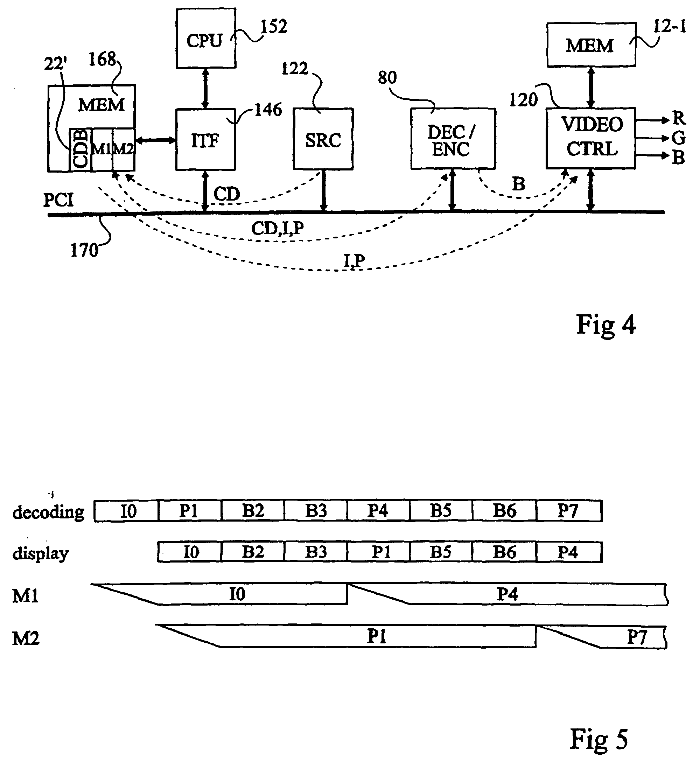

Figure 4 shows another embodiment of a computer where the decoder/encoder 80 is sharing the main memory 168. In this embodiment, main memory 168 corresponds to the shared memory 50 of Figure 2. In Figure 4, the decoder/encoder 80 according to the present invention is connected as a peripheral to a conventional computer equipped with a fast peripheral bus 70, for example a PCI bus, although the bus can be a VLB, an AGP bus, or any bus having the required bandwidth. In this embodiment, the fast peripheral bus 170 corresponds to the fast bus 70. As shown, decoder/encoder 80 does not have a dedicated memory, it utilizes a region 22' of the main memory 168 of the computer.

Region 22' includes a compressed data buffer CDB into which image source 122 writes the compressed image data, and two image buffers M1 and M2 associated with intra or predicted images. As will be seen hereafter, a buffer associated with bidirectional images is not required, these bidirectional images B being directly supplied to display adapter 120 as they are being decoded.

Thus, in the system of Figure 4, compressed data CD are transferred from image source 122 to buffer CDB of memory 168. These same compressed data are then transferred to decoder/encoder 80 which, if they correspond to intra or predicted images, retransmits them in decoded form to buffers M1 and M2 of memory 168. In the case where the compressed data correspond to bidirectional images, decoder/encoder 80 decodes these data and directly supplies display adapter 120 with the decoded data. The display adapter then supplies these data to a display device, such as a screen. The intra or predicted images stored in buffers M1 and M2 are transferred to display adapter 120 at the appropriate time and are used in the decoding of subsequent predicted or bidirectional images.

With a decoder/encoder 80 according to the invention, the rates on peripheral bus 170 are particularly high, which is why a fast bus is needed. However, the rate required is substantially decreased due to the bidirectional images not being stored in main memory 168, but being directly sent to display adapter 120. According to the invention, the bandwidth used on a PCI bus is approximately 20% with an MPEG-1 decoder/encoder and approximately 80% with an MPEG-2 decoder/encoder. These bandwidths correspond to worst case situations, the bandwidth in typical operation can be lower.

Of course, the storage capacity of the main memory 168 available for other uses is reduced during the operation of the decoder/encoder 80 because the decoder/encoder 80 is using the region 22'. In this embodiment the size of region 22' is however decreased from the size of the dedicated memory 22 used in the prior art (Figures 1a and 1c) by one image buffer. The memory region 22' is also only occupied while viewing video sequences. When the decoder/encoder is no longer used, region 22' can be freed at once for the other tasks.

The various modifications to be made on the computer to use a decoder/encoder according to the invention primarily involve software changes and are within the capabilities of those skilled in the art, who will find the necessary information in the various standards relating to the computer. For the computer to be able to use its peripherals, it conventionally executes background programs called peripheral drivers, which translate specific addresses issued by the CPU or a master peripheral (such as the decoder/encoder 80) into addresses adapted to the variable configuration of the computer.

For example, a peripheral driver associated with the decoder/encoder according to the invention translates the fixed addresses issued by the decoder/encoder 80 to have access to its image memory into addresses corresponding to the physical location of region 22', this region being likely to be variably assigned by the operating system according to the occupancy of memory 168. Similarly, this peripheral driver answers requests issued by image source 122 to supply compressed data by transferring these data into buffer CDB of region 22'.

In an alternative embodiment, the third image buffer M3 (Figure 1c) remains in the memory region 22' used for the decoder/encoder 80. A conventional decoder/encoder should be able to be used in several applications, especially to supply television images. In the case of television, the images are supplied in interlaced form, that is, all the odd lines of an image are supplied prior to the even lines. An MPEG decoder generally reconstructs the images in progressive form, that is, it supplies the image lines consecutively. The third image buffer M3 is then necessary to store the bidirectional images in the order of arrival of the lines (in progressive form) and then reread this image in interlaced form. The third image buffer M3 may also be needed if there is a delay between when the images are decoded and when they can be viewed, requiring the images to be stored.

Figure 5 illustrates the use of region 22' in the decoding according to the invention of sequence IO, P1, B2, B3, P4, B5, B6, P7. Image 10 is stored in buffer M1 during its decoding. As the decoding and the storage in buffer M2 of image P1 begins, image 10 is displayed. The macroblocks used to decode image P1 are fetched from buffer M1. Images B2 and B3 are displayed as they are being decoded, the macroblocks used for their decoding being fetched from buffers M1 and M2. Image P1 is displayed while image P4 is being decoded and stored in buffer M1 in the place of image 10. Image P1 is kept in buffer M2 until image B6 is decoded and displayed, and so on.

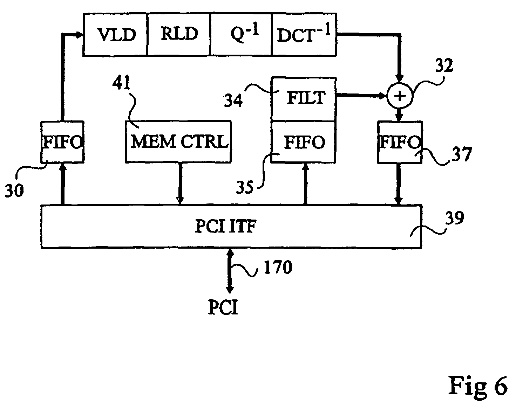

Figure 6 shows an architecture of an MPEG decoder according to the invention. Like any conventional MPEG decoder, this decoder includes a Variable Length Decoder (VLD) receiving compressed data from a FIFO memory 30. The VLD is followed by a run-level decoder (RLD), an inverse quantization circuit Q⁻¹ and an inverse cosine transform circuit DCT⁻¹. The output of circuit DCT⁻¹ is supplied to a first input of an adder 32, a second input of which receives macroblocks of a previously decoded image via a filter 34 and a FIFO 35. The decoded image data are supplied by the output of adder 32 and via a FIFO 37. FIFO 30 is supplied with compressed data from bus 170 via an interface circuit 39.

A decoder according to the invention differs from a conventional decoder in that the interface circuit 39 also connects FIFOs 35 and 37 to bus 170. A memory controller 41 calculates and supplies through bus 170 the addresses corresponding to the various exchanges required.

The management of the addresses of buffers M1 and M2 is similar to that performed by the memory controller of a conventional decoder, since these addresses are, according to the invention, translated according to the physical location of these buffers in memory 168 by a peripheral driver. Moreover, the memory controller of a decoder/encoder 80 according to the the invention is substantially simplified due to the absence of the third image buffer M3. The memory controller of a conventional decoder has to manage this buffer in a specific way to avoid a bidirectional image under decoding to be written over a bidirectional image under display.

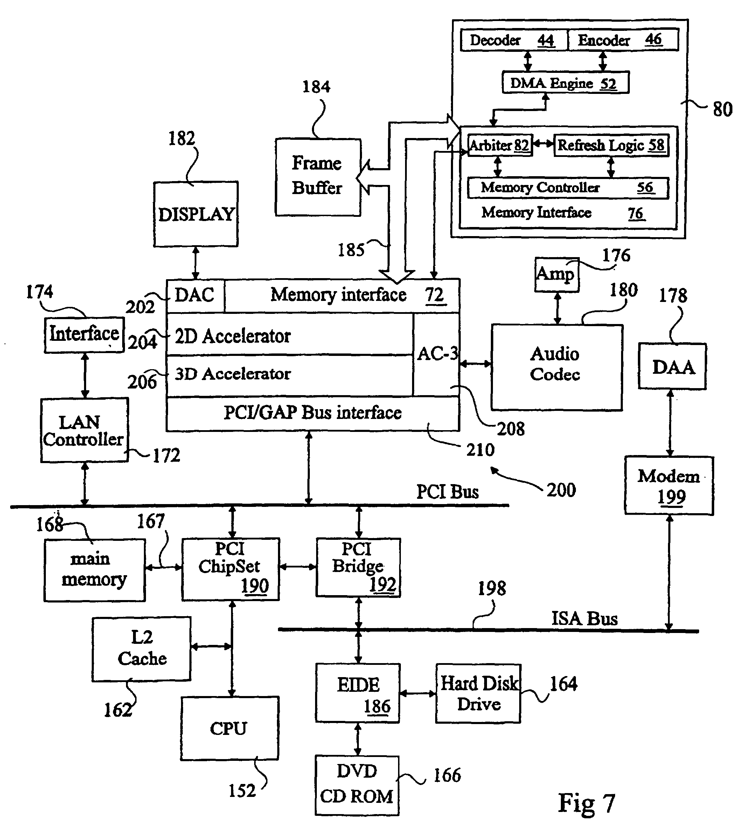

Figure 7 shows a computer where the decoder/encoder 80 is sharing a frame buffer 184 with a graphics accelerator 200. The graphics accelerator 200 can be any graphics accelerator known in the art. In the embodiment shown in Figure 7, the graphics accelerator 200 contains a 2D accelerator 204, a 3D accelerator 206, a digital to analog converter 202, a memory interface 72, and bus interfaces 210 for any system busses 170 to which it is coupled. The graphics accelerator 200 can also contain an audio compressor/decompressor 208. The graphics accelerator 200 is coupled to a display 182, and a frame buffer 184.

In this embodiment, the frame buffer 184 is the memory 50 to which the memory interfaces 72 and 76 are coupled. The frame buffer 184 is coupled to the memory interfaces 72 and 76 through a memory bus 185. In this embodiment, memory bus 185 corresponds to the fast bus 70. In current technology the memory bus 185, for coupling a graphics accelerator to a memory, may have a bandwidth of up to 400 Mbytes/s. This bandwidth is more than twice the bandwidth required for an optimized decoder/encoder 80. This allows the decoder/encoder 80 to operate in real time.

The graphics accelerator 200 can also be coupled to an audio codec 180 for decoding and/or encoding audio signals. The PCI bus 170 is also coupled to a chipset 190, and to other components, such as a LAN controller 172. In the present embodiment the chipset is a PCI chipset, although it can be any conventional chipset. The chipset 190 is coupled to a processor 152, main memory 168, and a PCI bridge 192. The PCI bridge bridges between the PCI bus 170 and the ISA bus 198. The ISA bus 198 is coupled to peripherals, such as a modem 199 and to an EIDE interface 186, which is coupled to other peripherals, such as a hard disk drive 164 and a DVD or CD-ROM 166. Although, if the peripherals are compatible with the PCI bus, the EIDE interface 186 can be integrated into the PCI chipset 190 and the peripherals 164, 166 can be coupled directly to the PCI chipset, eliminating the PCI bridge 192 and the ISA bus 198.

Referring to Figure 2, the operation of the arbiter 82 during a memory request will now be described. During operation the decoder/encoder 80, the first device 42, and the refresh logic 58, if it is present, request access to the memory through the arbiter 82. There may also be other devices that request access to the memory 50 through this arbiter. The arbiter 82 determines which of the devices gets access to the memory 50. The decoder/encoder gets access to the memory in the first time interval and the first device gets access to the memory in the second time interval. The DMA engine 52 of the decoder/encoder 80 determines the priority of the decoder/encoder 80 for access to the memory 50 and the burst length when the decoder/encoder 80 has access to the memory. The DMA engine 60 of the first device determines its priority for access to the memory 50 and the burst length when the first device 42 has access to the memory.

The decoder/encoder 80 or one of the other devices generates a request to access the memory 50. The request will be transferred to the arbiter 82. The state of the arbiter 82 is determined. The arbiter typically has three states. The first state is idle, when there is no device accessing the memory and there are no requests to access the memory. The second state is busy when there is a device accessing the memory and there are no other requests to access the memory. The third state is queue when there is a device accessing the memory and there is another request to access the memory.

It is also determined if two requests are issued simultaneously. This can be performed either before or after determining the state of the arbiter. Access to the memory is determined according to the following chart.

| Arbiter state | Simultaneous requests | Action |
|---|---|---|
| Idle | Yes | One of the requests gets access to the memory based on the priority scheme, and the other request is queued. |
| Busy | Yes | Both requests are queued in an order based on the priority scheme. |
| Queue | Yes | Both requests are queued in an order based on the priority scheme. |
| Idle | No | The device gets access to the memory. |
| Busy | No | The request is queued. |
| Queue | No | The requests are queued in an order based on the priority scheme. |

The priority scheme can be any priority scheme that ensures that the decoder/encoder 80 gets access to the memory 50 often enough and for enough of a burst length to operate properly, yet not starve the other devices sharing the memory. The priority of the first device, device priority, and the priority of the decoder/encoder 80, decoder priority, is determined by the priority scheme. This can be accomplished in several ways.

To operate in real time, the decoder/encoder 80 has to decode an entire image in time to be able to display it the next time the screen is refreshed, which is typically every 1/30 of a second. The decoder/encoder 80 should get access to the memory to store and retrieve parts of this and/or of past and/or future images, depending on the decoding standard being used, often enough and for long enough burst lengths to be able to decode the entire image in the 1/30 of a second between screen refreshes.

There are many ways to do this. One way is to make the bursts of the first device, and any other device like the screen refresh that shares the memory and memory interface [hereinafter sharing device], have short burst lengths, and to make sure that the same device is not the next device to get access to the memory when other devices have been waiting for a long time. Another way is to preempt the sharing device if its burst length exceeds a burst length threshold and again to make sure that the same device is not the next device to get access to the memory when other devices have been waiting for a long time. Preferably, when the preemption is used, the sharing device would be preempted when its burst length exceeds 16 words. A third way is to limit the bandwidth available to the sharing devices, this way the decoder/encoder 80 always has enough bandwidth to operate in real time. Preferably the bandwidth of the sharing devices is limited only when the decoder/encoder 80 is operating. In this embodiment a memory queue, such as a FIFO, in the decoder/encoder 80 generates an error signal when it falls below a data threshold. The error is sent to the CPU 152 and the CPU 152 can either shut down the system, drop an image frame or resume the decoding/encoding process.

There are also many ways to make sure that the same device is not the next device to get access to the memory when other devices have been waiting for a long time. This both ensures decoder/encoder 80 gets access to the memory 50 often enough, yet not starve the other devices sharing the memory. One way to do this is to disallow back to back requests. Another is to have shifting priority, where a particular request starts with a lower priority when first made and the priority increases with the length of time the request is in the queue, eventually reaching a priority above all of the other requests. In one embodiment, the decoder/encoder 80 has a one clock cycle delay between requests to allow a sharing device to generate a request between the decoder/encoder requests.

In this embodiment the burst length of the decoder/encoder is relatively short, approximately four to seventeen words. This gives the graphics accelerator more frequent access to the memory to ensure that the display is not disturbed by the sharing of the memory interface 48 and memory 50 when the decoder/encoder shares a memory with the graphics accelerator 200.

An electronic system 40, shown in Figure 2, containing the first device 42 coupled to the memory 50, the decoder/encoder 80 coupled to the same memory 50, where the decoder/encoder 80 shares the memory 50 with the first device 42, provides several advantages. Referring to Figure 2 and Figure 1b simultaneously, the decoder 44, and encoder 46, according to the invention do not each need their own dedicated memory 22 that was necessary in the prior art for the decoder/encoder to operate in real time, resulting in significant reduction in the cost of the device. Allowing the decoder/encoder 80 to share the memory 50 with a first device 42 and the decoder/encoder 80 to access the memory 50 through a fast bus 70 having a bandwidth of at least the bandwidth threshold permits the decoder/encoder to operate in real time. This allows the decoder/encoder to operate in real time and reduces stops between images and dropping a significant number of frames to a point where both are practically eliminated. This produces better images, and eliminates any discontinuities and delays present in the prior art.

Additionally, in the embodiment of the invention where the fast bus 70 is a system bus to which the decoder/encoder 80 is already coupled, the number of pins of the decoder/encoder 80 is considerably smaller than that of a conventional decoder. The decoder/encoder according to the invention only requires the signals of peripheral bus 170 (49 signals for the PCI bus), while a conventional decoder further includes an interface with its dedicated memory 22, which is typically an external memory.

Thus, decoding in a computer can be performed according to the invention by means of a low-cost (due to the small number of pins) single integrated circuit, without the additional, costly, dedicated memory 22. This single integrated circuit can be directly placed on the computer motherboard for a low additional cost. Of course, the decoder/encoder according to the invention can be mounted, as is conventional, on an extension board to be connected to a bus.

A further advantage of the present invention is that the video and/or audio decompression and/or compression device can share memory with the first device without being integrated into the first device. This allows the first device to be a standard device with some adjustments made to its memory interface.

Further background on compression can be found in: International Organization for Standards, INFORMATION TECHNOLOGY - CODING OF MOVING PICTURES AND ASSOCIATED AUDIO FOR DIGITAL STORAGE MEDIA AT UP TO ABOUT 1.5 MBITS/S, Parts 1-6, International Organization for Standards; International Standards Organization, INFORMATION TECHNOLOGY - GENERIC CODING OF MOVING PICTURES AND ASSOCIATED AUDIO INFORMATION, Parts 1-4, International Organization for Standards; Datasheet "STi3500A" of SGS-THOMSON Microelectronics; STi3500A - Advanced Information for an MPEG Audio/ MPEG-2 Video Integrated Decoder" (June 1995); Watkinson, John, COMPRESSION IN VIDEO AND AUDIO, Focal Press, 1995; Minoli, Daniel, VIDEO DIALTONE TECHNOLOGY, McGraw-Hill, Inc., 1995. Further background on computer architecture can be found in Anderson, Don and Tom Shanley, ISA SYSTEM ARCHITECTURE, 3rd ed., John Swindle ed., MindShare Inc., Addison-Wesley Publishing Co., 1995.

While the invention has been specifically described with reference to several embodiments, it will be understood by those of ordinary skill in the prior art having reference to the current specification and drawings that various modifications may be made and various alternatives are possible therein without departing from the scope of the invention.

For example:

Although the memory is described as DRAM the other types of memories including read-only memories, SRAMs, or FIFOs may be used without departing from the scope of the invention.

Any conventional decoder including a decoder complying with the MPEG-1, MPEG-2, H.261, or H.261 standards, or any combination of them, or any other conventional standard can be used as the decoder/encoder.

## Claims

1. A video decoder connectable to a fast bus (170) of a microcomputer for processing compressed images received on the fast bus, the decoder being coupled to an image memory (22') storing at least one previously decoded image used to decode a current image, **characterized in that** the image memory is a dedicated region of the main memory (50, 168) of the microcomputer, accessible through the fast bus.

2. The decoder according to claim 1, **characterized in that** it supplies the decoded images to a display adapter (120) from the memory, except for bidirectional images (B) which the decoder supplies to the display adapter directly as they are decoded.

3. The decoder according to claim 2, wherein the main memory (168) stores intra images (I) which are not obtained from a preceding image and predicted images (P) which are obtained from a single preceding image, the bidirectional images (B), not stored in the memory, being obtained from two preceding intra or predicted images.

4. The decoder according to claim 1, associated with an arbiter (82) for selectively allowing the decoder and another device of the microcomputer to access the memory.

5. The decoder of claim 4, wherein the arbiter is monolithically integrated into a memory interface of the decoder.

6. The decoder of claim 4, wherein the arbiter is coupled to said other device.

7. The decoder of claim 6, wherein the arbiter is monolithically integrated into a memory interface of said other device.

8. The decoder of claim 4, wherein the arbiter is coupled to the memory.

9. The decoder of claim 4, in combination with an encoder coupled to the arbiter.

10. The decoder of claim 1, wherein the fast bus is a memory bus.

11. The decoder of claim 1, wherein the fast bus is a PCI bus.

12. A microcomputer motherboard comprising a decoder or encoder according to any of claims 1 to 11.

## Patentansprüche

1. Videodecodierer, der mit einem schnellen Bus (170) eines Microcomputers verbindbar ist zum Verarbeiten von komprimierten Bildern, die an dem schnellen Bus empfangen wurden, wobei der Decodierer mit einem Bildspeicher (22') gekoppelt ist, der wenigstens ein zuvor decodiertes Bild speichert, das verwendet wird zum Decodieren eines derzeitigen Bildes, **dadurch gekennzeichnet, dass** der Bildspeicher ein zugeordneter bzw. zweckbestimmter Bereich des Hauptspeichers (50, 168) des Microcomputers ist, auf den durch den schnellen Bus zugegriffen werden kann.

2. Decodierer nach Anspruch 1, **dadurch gekennzeichnet, dass** er die decodierten Bilder an einen Anzeigeadapter (120) aus dem Speicher liefert, mit Ausnahme von bidirektionalen Bildern (B), welche der Decodierer direkt, wenn sie decodiert sind, an den Anzeigeadapter liefert.

3. Decodierer nach Anspruch 2, wobei der Hauptspeicher (168) Intrabilder (I) speichert, welche nicht von einem vorhergehenden Bild erhalten wurden, und vorhergesagte bzw. prädikte Bilder (P), welche aus einem einzelnen vorhergehenden Bild erhalten wurden, wobei die bidirektionalen Bilder (B), die nicht in dem Speicher gespeichert werden, von zwei vorhergehenden Intra- oder vorhergesagten Bildern erhalten wurden.

4. Decodierer nach Anspruch 1, der mit einem Arbiter bzw. Buszuteiler (82) assoziiert ist zum selektiven Erlauben des Decodierers und einer weiteren Einrichtung des Microcomputers auf den Speicher zuzugreifen.

5. Decodierer nach Anspruch 4, wobei der Arbiter bzw. Buszuteiler monolithisch integriert ist in ein Speicherinterface bzw. eine Speicherschnittstelle des Decodierers.

6. Decodierer nach Anspruch 4, wobei der Arbiter mit der anderen Einheit gekoppelt ist.

7. Decodierer nach Anspruch 6, wobei der Arbiter bzw. Buszuteiler monolithisch integriert ist in eine Speicherschnittstelle der anderen Einheit.

8. Decodierer nach Anspruch 4, wobei der Arbiter- bzw. Buszuteiler mit dem Speicher gekoppelt ist.

9. Decodierer nach Anspruch 4 in Kombination mit einer Codiereinheit, die mit dem Arbiter bzw. Buszuteiler gekoppelt ist.

10. Decodierer nach Anspruch 1, wobei der schnelle Bus ein Speicherbus ist.

11. Decodierer nach Anspruch 1, wobei der schnelle Bus ein PCI-Bus ist.

12. Ein Microcomputer-Motherboard, das einen Decodierer oder Codierer nach einem der Ansprüche 1 bis 11 aufweist.

## Revendications

1. Décodeur vidéo connectable à un bus rapide (170) d'un microordinateur pour traiter des images compressées reçues sur le bus rapide, le décodeur étant couplé à une mémoire d'image (22') mémorisant au moins une image décodée préalablement utilisée pour décoder une image courante, **caractérisé en ce que** la mémoire d'image est une région spécifique de la mémoire principale (50, 168) du micro-ordinateur, accessible par le bus rapide.

2. Décodeur selon la revendication 1, **caractérisé en ce qu'**il fournit les images décodées à un adaptateur d'affichage (120) à partir de la mémoire sauf en ce qui concerne des images bidirectionnelles (B) que le décodeur fournit à un adaptateur d'affichage directement telles qu'elles sont décodées.

3. Décodeur selon la revendication 2, dans lequel la mémoire principale (168) mémorise des images intra (I) qui ne sont pas obtenues à partir des images précédentes, et des images prédites (P) qui sont obtenues à partir d'une seule image précédente, les images bidirectionnelles (B) non mémorisées dans la mémoire étant obtenues à partir de deux images intra ou prédites précédentes.

4. Décodeur selon la revendication 1, associé à un arbitre (82) pour permettre sélectivement au décodeur et à un autre dispositif du micro-ordinateur d'accéder à la mémoire.

5. Décodeur selon la revendication 4, dans lequel l'arbitre est intégré de façon monolithique dans une interface de mémoire du décodeur.

6. Décodeur selon la revendication 4, dans lequel l'arbitre est couplé à l'autre dispositif.

7. Décodeur selon la revendication 6, dans lequel l'arbitre est intégré de façon monolithique dans une interface de mémoire de l'autre dispositif.

8. Décodeur selon la revendication 4, dans lequel l'arbitre est couplé à la mémoire.

9. Décodeur selon la revendication 4, en combinaison avec un coupleur couplé à l'arbitre.

10. Décodeur selon la revendication 1, dans lequel le bus rapide est un bus mémoire.

11. Décodeur selon la revendication 1, dans lequel le bus rapide est un bus PCI.

12. Carte mère de micro-ordinateur comprenant un décodeur ou un codeur selon l'une quelconque des revendications 1 à 11.
